(19) **Europäisches Patentamt**

**European Patent Office**

**Office européen des brevets**

(11) **EP 1 596 278 A1**

(12) **DEMANDE DE BREVET EUROPEEN**

(43) Date de publication:
**16.11.2005 Bulletin 2005/46**

(51) Int Cl.7: **G06F 7/72**

(21) Numéro de dépôt: **04291204.8**

(22) Date de dépôt: **11.05.2004**

(84) Etats contractants désignés:
**AT BE BG CH CY CZ DE DK EE ES FI FR GB GR HU IE IT LI LU MC NL PL PT RO SE SI SK TR**
Etats d'extension désignés:
**AL HR LT LV MK**

(71) Demandeur: **Axalto SA**
**92120 Montrouge Cedex (FR)**

(72) Inventeur: **Courtois, Nicolas**
**78000 Versailles (FR)**

(74) Mandataire: **Renault, Patricia Marie Jacqueline**
**AXALTO SA**
**Propriete Intellectuelle**
**68 route de Versailles-BP 45**
**78431 Louveciennes Cedex (FR)**

(54) **Procédé de protection d'un ensemble cryptographique par masquage homographique**

(57)  La présente invention concerne un procédé de protection d'un ensemble mettant en oeuvre un processus de calcul cryptographique qui utilise une fonction homographique f du type :

- f(z)= (az+b) / (cz+d) quand (cz+d) n'est pas égal à 0 et
- f(-d/c)=a/c

la fonction f opérant sur des variables masquées caractérisé en ce que, pour tout k, si x est une entrée et y = f(x+k) une sortie de la fonction f, pour passer directement d'une valeur masquée x+m_i (masquage additif de type XOR) à une valeur masquée y+m_j, le procédé consiste à réaliser cette opération à l'aide d'une composition de plusieurs transformations opérant sur GF(2^k) avec l'adjonction de l'infini, définies sous forme (ax+b)/(cx+d), et de transformations qui échangent deux points.

EP 1 596 278 A1

## Description

## DOMAINE TECHNIQUE

La présente invention concerne un procédé de sécurisation d'un ensemble électronique mettant en oeuvre un algorithme cryptographique qui utilise une quantité secrète telle qu'une clé secrète. Plus précisément, le procédé vise à réaliser une version de l'algorithme qui ne soit pas vulnérable face à un certain type d'attaques physiques telles que par exemple des attaques- dites *High-Order Differential Power Analysis* (attaques électroniques d'ordre deux ou supérieur) - qui cherchent à obtenir des informations sur la clé secrète à partir de l'étude de la consommation électrique de l'ensemble électronique au cours de l'exécution du calcul.

## PROBLEME TECHNIQUE

### 1.1 Le contexte

Les algorithmes cryptographiques considérés ici utilisent une clé secrète pour calculer une information de sortie en fonction d'une information d'entrée. Des utilisations de ces algorithmes sont nombreuses : il peut s'agir d'une opération de chiffrement, de déchiffrement ou de signature ou de vérification de signature, ou d'authentification ou de non-répudiation ou autre. Actuellement de nombreuses applications basent leur sécurité sur les algorithmes cryptographiques à clef secrète tels que DES et plus récemment AES qui depuis 2000 s'impose comme le standard de chiffrement mondial [Voir Joan Daemen, Vincent Rijmen: AES proposal: Rijndael. La dernière version est disponible sur l'internet, http://csrc.nist.gov/encryption/aes/rijndael/Rijndael. pdf ]. Ces algorithmes cryptographiques sont étudiés en cryptographie, et les meilleures attaques connues permettent d'être confiant quant à leur sécurité. Ainsi avec ces solutions cryptographiques la sécurité se ramène essentiellement à la sécurité de la clef secrète utilisée. Malheureusement ni la sécurité d'une donnée stockée sur un PC, ni la sécurité d'un mot de passe mémorisé par un humain ne peut en aucun cas être prise au sérieux. Ainsi il est devenu indispensable de stocker des quantités secrètes dans des modules sécurisés autonomes tels que la carte à puce.

### 1.2 Le problème : la protection des algorithmes embarqués

Les algorithmes cryptographiques parfaitement sûrs dans le monde mathématique idéalisé ne le sont plus dans le monde réel: la carte à puce rayonne, consomme du courant, et ainsi cycle par cycle, des informations qui dépendent des quantités secrètes fuient de la carte.
Pour obtenir une réelle sécurité il faut que les données intermédiaires de l'algorithme n'apportent aucune information sur les dites quantités secrètes. De plus, de nouvelles attaques ont été mises en place [Voir les documents suivants :

P. Kocher, J. Jaffe, B. Jun, Introduction to Differential Power Analysis and Related Attacks. Technical Report, Cryptography Research Inc., 1998. Available from http://www.cryptography.com/dpa/technical/index.html
T.S. Messerges, Using Second-Order Power Analysis to Attack DPA Resistant software. In Proceedings of CHES'2000, LNCS 1965, pp. 238-251, Springer-Verlag, 2000. :]

Ces attaques sont des attaques dits d'ordre supérieur (par exemple « la DPA d'ordre 2 »). Cela veut dire que l'attaquant combine l'information qui fuit à deux ou plusieurs moments de l'exécution de l'algorithme cryptographique. Pour se protéger contre ce type d'attaques il ne suffit plus que les données intermédiaires de l'algorithme n'apportent aucune information sur les quantités secrètes. Il faut aussi que des données de plusieurs moments d'exécution prises ensemble ne puissent être combinées dans une attaque pour obtenir une information quelconque sur les quantités secrètes.

### 1.3 Les contraintes

Une solution au problème doit non seulement protéger contre les attaques de type DPA mais doit pouvoir s'étendre à des attaques « DPA d'ordre 2 » et plus. Il faut aussi que la solution satisfasse à des contraintes raisonnables au niveau de temps d'exécution et de mémoire utilisée. Un des objectifs de la présente invention est que le temps d'exécution et la mémoire soient, par rapport à une implémentation non sécurisée, multipliés pas une petite constante, qui ne dépend ni de la taille du bloc, ni du nombre d'itérations de AES, ce que la présente invention permet d'obtenir.
La présente invention garantit la sécurité de AES contre des attaques de type DPA d'ordre 1, 2 ou supérieur, SPA et autres attaques électroniques ou par d'autres canaux cachés.
Dans ce qui suit, il est décrit une solution générale particulièrement bien adaptée à l'algorithme AES, mais également applicable aux autres algorithmes cryptographiques. Toutes les solutions connues pour ce problème ont été critiquées pour leur niveau de performance et leur utilisation mémoire, et ont été sujettes à des attaques publiées dans la littérature.

## RESUME DE L'INVENTION

La présente invention concerne un procédé de sécurisation d'un système électronique comprenant un processeur et une mémoire, mettant en oeuvre un processus de calcul cryptographique stocké dans la mémoire qui utilise une quantité secrète k et qui utilise une fonction homographique f du type :

- f(z)= (az+b) / (cz+d) quand (cz+d) n'est pas égal à 0 et
- f(-d/c)=a/c

la fonction f opérant sur des variables masquées. Le procédé consiste, pour tout k, si x est une entrée et y = f(x+k) une sortie de la fonction f, pour passer directement d'une valeur masquée x+m_i (masquage additif de type XOR) à une valeur masquée y+m_j, à réaliser cette opération à l'aide d'une composition de plusieurs transformations opérant sur GF(2^k) avec l'adjonction de l'infini, définies sous forme (ax+b)/(cx+d), et de transformations qui échangent deux points.

La présente invention concerne également le système de mise en oeuvre dudit procédé.

## MANIERE DE REALISER L'INVENTION

Le procédé selon l'invention vise à sécuriser un système électronique, et par exemple un système embarqué tel qu'une carte à puce mettant en oeuvre un processus de calcul cryptographique qui utilise une clé secrète. Le système électronique comprend un processeur et une mémoire. Le processus de calcul cryptographique est installé dans la mémoire, par exemple de type ROM dudit système. Le processeur dudit système exécute le processus de calcul en utilisant une clé secrète, stockée dans une zone secrète d'une mémoire, par exemple de type E2PROM.

Le procédé selon l'invention consiste à apporter une protection homographique.

On va d'abord décrire la philosophie générale de la protection.

2.1 Principe de la décomposition

Chaque système cryptographique peut être décomposé en un certain nombre d'opérations élémentaires comme addition, XOR etc..

Dans le cas de AES, on peut diviser les opérations en deux catégories :

- Les opérations dites linéaires, qu'il est facile de protéger par un masquage additif classique. Ceci est connu et n'est pas l'objet de cette invention.
- Si l'on enlève les opérations linéaires, il reste une seule opération, opération Inv de Rijndael, dérivée de l'opération d'inverse dans un corps fini GF(256) ou similaire, avec 0 qui est envoyé sur 0.

On s'intéresse uniquement à la protection de l'opération Inv.

La solution présentée s'applique aussi à d'autres opérations similaires.

2.2 Préliminaires

Soit K un corps fini. Dans le cas de AES K=GF (256).

On suppose qu'il existe une implémentation quelconque de K, ce qui revient à implémenter l'addition et la multiplication dans K. Par exemple celle définie dans [AES].

Soit Inv l'inverse modifié de Rijndael [AES], c'est à dire :

- $Inv(x) = 1/x$ dans K quand x est non nul,
- $Inv(0) = 0$.

On définit K' par ajout d'un point à K appelé infini.
Ainsi $K' = K \cup oo$.

On définit Inv' comme l'opération suivante :

- $Inv'(x) = 1/x$ dans K quand x est non nul et différent de oo,
- $Inv'(0) = oo$,
- $Inv'(oo) = 0$.

L'invention part du principe que pour calculer Inv on peut appliquer la composition de Inv' et d'une opération qui échange 0 et oo.

Soit E[a,b] une opération de K' dans K' qui échange les points a et b :

- $E[a,b](x) = x$ quand x n'est égal ni à a ni à b,
- $E[a,b](a) = b$,
- $E[a,b](b) = a$.

2.3 Comment représenter l'opération Inv.

On a : Pour tout x dans K, (Inv n'est pas définie sur tout K') :

$$Inv(x) = Inv' (E[0,oo](x))$$

Le principe de protection est le suivant: Inv' est membre d'un groupe stable par composition, de taille raisonnable, ce qui n'est pas le cas de Inv. Ainsi on peut pour Inv' faire des protections qui ne peuvent pas exister pour Inv.

Ce groupe est défini comme l'ensemble des fonctions suivantes :

Pour tout 4-uplet (a,b,c,d) d'éléments de K tels que ac<>bd, on définit :

Function HOM[a,b,c,d] = la fonction suivante:

- $HOM[a,b,c,d](x) = (ax+b) / (cx+d)$ dans K quand (cx+d) n'est pas égal à 0.
- $HOM[a,b,c,d](-d/c) = oo$,
- $HOM[a,b,c,d](oo) = a/c$.

Pour implémenter Inv on va écrire la fonction suivante K'->K' qui coïncide avec Inv sur l'ensemble K :

$$\text{Inv' o } E[0,oo]$$

Le signe « o » dénote la composition des fonctions habituelles.

Ensuite, on va écrire Inv', comme produit des fonctions homographiques :

$$\text{Inv'}=F\_1 \text{ o } F\_2 \text{ o ... o}F\_n \text{ o } G\_1 \text{ o .. } G\_n$$

Chacune des fonctions F_i et G_j est sous la forme HOM[a,b,c,d].

Puisque Inv' fait partie d'un groupe, cette décomposition se fait de façon arbitraire. On peut par exemple choisir au hasard 2*n-1 fonctions et recalculer la fonction qui manque pour que la composition fasse Inv'.

Ensuite on a la fonction suivante K'->K' qui coïncide avec Inv sur K :

$$F\_1 \text{ o } F\_2 \text{ o ... o } F\_n \text{ o } G\_1 \text{ o .. } G\_n \text{ o } E[0,oo]$$

Comme toutefois dans K' toutes ces fonctions sont bijectives, on peut calculer deux points a et b tels que cette fonction soit égale à

$$F\_1 \text{ o } F\_2 \text{ o...o } F\_n \text{ o } E[a,b] \text{ o } G\_1 \text{ o.. } G\_n.$$

Ces points sont a=G_1 (... G_n(0)) et b= G_1 (... G_n(oo)).

C'est ainsi que sera implémentée notre protection :

1. On va générer les F_1, F_2, ..., F_n, G_1, G_n. Chacun est décrit par 4 éléments de K, soit 4 octets dans Rijndael/AES.
2. On va calculer a et b.
3. Ensuite on va appliquer cette suite d'opérations pour calculer Inv.
4. Dans AES il y a plusieurs Inv. La suite d'opérations effectuée, comme défini dans 1-3, peut varier d'un calcul à l'autre.

2.4 Comment protéger l'opération Inv

Dans une implémentation de AES sécurisée on ne fait pas le calcul de y = Inv(x) à partir de x, mais on fait plutôt le calcul direct à partir de la valeur masquée x+m_i pour obtenir directement y+m_j, passer par des valeurs intermédiaires x et y qui donnent de l'information. On doit donc calculer la fonction

$$y = \text{Inv}(x+m\_i) + m\_i$$

Comme avec Inv, cette fonction peut être vue de multiples façons comme combinaison des opérations de base sous forme HOM[a,b,c,d]. et des échanges de deux points.

Il est conseillé même d'aller plus loin. Soit K_i une clé intermédiaire de AES. On peut protéger directement l'opération x |-> Inv (x +K_i) de même façon. Après l'échange de deux points cette opération est également sur tout K à un certain HOM[a,b,c,d]:K'->K' dans le groupe, qui peut être décomposé de même façon que pour Inv. Dans une implémentation protégée par un masque additif on aura à décomposer la fonction :

$$x \ |\text{-> } \text{Inv } (x +K\_i+m\_i) +m\_j$$

Ce qui se fait de même façon.

2.5 Améliorations

Au lieu d'une, on peut utiliser plusieurs opérations E[a,b].

Il est facile à voir que pour chaque opération HOM[a,b,c,d] on peut supposer que a est égal à 0 ou 1.

Bien que la même méthode permette aussi de protéger l'implémentation quand on utilise le masquage additif ou multiplicatif, ceci n'est pas conseillé. Ces masquages ne sont pas bijectifs ou fixent certains points, par exemple un masquage multiplicatif ne masque pas 0. Un masquage homographique quelconque sera bijectif sans défaut mais cela nécessite de stocker une de 257 valeurs, ce qui n'est pas très pratique - ne rentre pas sur 1 octet.

Ce document ne décrit pas l'ensemble de l'implémentation protégée AES.

Il cherche à décrire comment protéger le composant non-linéaire, le plus difficile à protéger. La protection de l'ensemble peut et doit comporter d'autres protections classiques et largement connues.

La présente invention concerne donc dans la forme de réalisation particulière décrite un procédé de protection d'un ensemble mettant en oeuvre un processus de calcul cryptographique qui utilise au moins une fonction Inv (Inverse dans GF(2^k) avec 0 envoyé sur 0 comme dans AES) avec des variables intermédiaires x du calcul manipulées avec un masquage additif x+m_i, avec m_i étant le masque et + étant le XOR, caractérisé en ce que, pour tout k, si x est une entrée et y = f(x+k), pour passer directement de la valeur masquée x+m_i à une valeur masquée y+m_i sans divulguer des valeurs intermédiaires, cette opération est réalisée à l'aide de la composition de plusieurs transformations opérant sur GF(2^k) avec l'adjonction de l'infini, définis sous forme (ax+b)/(cx+d), et de transformations qui échangent deux points.

Elle concerne également un système comprenant des moyens de mémorisation implémentant un processus de calcul cryptographique qui utilise la fonction Inv (Inverse dans GF($2^k$) avec 0 envoyé sur 0 comme dans AES) avec des variables intermédiaires x du calcul manipulées avec un masquage additif $x+m_i$, avec $m_i$ étant le masque et + étant le XOR, caractérisé en ce que, pour tout k, si x est une entrée et y = Inv(x+k), pour passer directement de la valeur masquée $x+m_i$ à une valeur masquée $y+m_j$ sans divulguer des valeurs intermédiaires, on va voir cette opération comme composition de plusieurs transformations opérant sur GF($2^k$) avec l'adjonction de l'infini, définis sous forme (ax+b)/(cx+d), et des transformations qui échangent deux points.

## Revendications

1. Procédé de protection d'un ensemble mettant en oeuvre un processus de calcul cryptographique qui utilise une fonction homographique f du type :

   • f(z)= (az+b) / (cz+d) quand (cz+d) n'est pas égal à 0 et
   • f(-d/c)=a/c

   la fonction f opérant sur des variables masquées **caractérisé en ce que**, pour tout k, si x est une entrée et y = f(x+k) une sortie de la fonction f, pour passer directement d'une valeur masquée $x+m_i$ (masquage additif de type XOR) à une valeur masquée $y+m_i$, le procédé consiste à réaliser cette opération à l'aide d'une composition de plusieurs transformations opérant sur GF($2^k$) avec l'adjonction de l'infini, définies sous forme (ax+b)/(cx+d), et de transformations qui échangent deux points.

2. Procédé selon la revendication 1, **caractérisé en ce que** l'opération f est la fonction Inv (Inverse dans GF($2^k$) avec 0 envoyé sur 0 comme dans AES).

3. Procédé selon l'une des revendications 1 ou 2, **caractérisé en ce que** le processus de calcul protégé est Rijndael ou AES.

4. Procédé selon l'une des revendications 1 à 3, **caractérisé en ce que** au lieu de masquage additif de x par x+m, le masquage est fait pour une opération homographique quelconque: au lieu de x on manipule la valeur de (ax+b)/(cx+d).

5. Procédé selon l'une des revendications précédentes, **caractérisé en ce que** les opérations sont implémentés par tables.

6. Procédé selon l'une des revendications précédentes utilisé pour protéger une implémentation dans une carte à puce, token USB, module cryptographique, ou autre hardware spécialisé.

7. Procédé selon l'une des revendications précédentes utilisé pour protéger une implémentation software avec « code obfuscation » (une carte à puce virtuelle).

8. Procédé selon l'une des revendications précédentes utilisé pour protéger une implémentation exécutée de façon obscurcie sur un serveur distant (un autre type de carte à puce virtuelle).

9. Système électronique comportant des moyens de stockage d'un processus de calcul, des moyens de traitement dudit processus de calcul cryptographique qui utilise une fonction homographique f du type :

   • f(z)= (az+b) / (cz+d) quand (cz+d) n'est pas égal à 0 et
   • f(-d/c)=a/c

   la fonction f opérant sur des variables masquées **caractérisé en ce qu'**il comporte des moyens permettant, pour tout k, si x est une entrée et y = f(x+k) une sortie de la fonction f, pour passer directement d'une valeur masquée $x+m_i$ (masquage additif de type XOR) à une valeur masquée $y+m_j$, de réaliser cette opération à l'aide d'une composition de plusieurs transformations opérant sur GF($2^k$) avec l'adjonction de l'infini, définies sous forme (ax+b)/(cx+d), et de transformations qui échangent deux points.

10. Programme d'ordinateur comprenant des instructions de code de programme pour l'exécution des étapes du procédé selon l'une des revendications 1 à 8 lorsque ledit programme est exécuté dans un système électronique.

**Office européen des brevets**

**RAPPORT DE RECHERCHE EUROPEENNE**

Numéro de la demande

EP 04 29 1204

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| A | WO 01/31422 A (VON WILLICH MANFRED) 3 mai 2001 (2001-05-03) * figures 3-9 * * pages 1--5 * ----- | 1-10 | G06F7/72 |
| A | US 2001/053220 A1 (KOCHER PAUL C ET AL) 20 décembre 2001 (2001-12-20) * figure 2 * * page 1, colonne de droite - page 2, colonne de gauche * ----- | 1-10 | |
| A | US 6 295 606 B1 (DABBISH EZZAT A ET AL) 25 septembre 2001 (2001-09-25) * figures 1-11 * * colonne 1, ligne 5 - colonne 2, ligne 3 * ----- | 1-10 | |

| DOMAINES TECHNIQUES RECHERCHES (Int.Cl.7) |
|---|
| G06F H04L |

Le présent rapport a été établi pour toutes les revendications

| Lieu de la recherche | Date d'achèvement de la recherche | Examinateur |
|---|---|---|
| Munich | 21 octobre 2004 | Pfab, S |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
................................................................
& : membre de la même famille, document correspondant

EPO FORM 1503 03.82 (P04C02)

**EP 1 596 278 A1**

**ANNEXE AU RAPPORT DE RECHERCHE EUROPEENNE
RELATIF A LA DEMANDE DE BREVET EUROPEEN NO.**

EP 04 29 1204

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

21-10-2004

| Document brevet cité au rapport de recherche | | Date de publication | Membre(s) de la famille de brevet(s) | | Date de publication |
|---|---|---|---|---|---|
| WO 0131422 | A | 03-05-2001 | AU | 773982 B2 | 10-06-2004 |
| | | | AU | 2301401 A | 08-05-2001 |
| | | | CA | 2388971 A1 | 03-05-2001 |
| | | | CN | 1413398 T | 23-04-2003 |
| | | | EA | 3874 B1 | 30-10-2003 |
| | | | EP | 1226681 A2 | 31-07-2002 |
| | | | JP | 2003513490 T | 08-04-2003 |
| | | | WO | 0131422 A2 | 03-05-2001 |
| | | | ZA | 200202798 A | 10-07-2003 |
| US 2001053220 | A1 | 20-12-2001 | US | 6278783 B1 | 21-08-2001 |
| | | | US | 2002124178 A1 | 05-09-2002 |
| | | | AU | 6381699 A | 10-01-2000 |
| | | | CA | 2333095 A1 | 29-12-1999 |
| | | | EP | 1090480 A2 | 11-04-2001 |
| | | | JP | 2002519722 T | 02-07-2002 |
| | | | WO | 9967919 A2 | 29-12-1999 |
| US 6295606 | B1 | 25-09-2001 | AU | 6609200 A | 13-02-2001 |
| | | | WO | 0108012 A1 | 01-02-2001 |

EPO FORM P0460

Pour tout renseignement concernant cette annexe : voir Journal Officiel de l'Office européen des brevets, No.12/82